(19) **Europäisches Patentamt**
**European Patent Office**
**Office européen des brevets**

(11) **EP 4 380 080 A1**

(12) **EUROPEAN PATENT APPLICATION**
published in accordance with Art. 153(4) EPC

(43) Date of publication:
**05.06.2024 Bulletin 2024/23**

(21) Application number: **22848876.3**

(22) Date of filing: **28.02.2022**

(51) International Patent Classification (IPC):
***H04J 99/00*** *(2009.01)*     ***H04L 27/26*** *(2006.01)*

(52) Cooperative Patent Classification (CPC):
**H04J 99/00; H04L 27/26**

(86) International application number:
**PCT/JP2022/008258**

(87) International publication number:
**WO 2023/007792 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2021 JP 2021123824**

(71) Applicant: **Sony Group Corporation
Tokyo 108-0075 (JP)**

(72) Inventors:
• **TANAKA Ken
Tokyo 108-0075 (JP)**
• **MATSUDA Hiroki
Tokyo 108-0075 (JP)**

(74) Representative: **D Young & Co LLP
3 Noble Street
London EC2V 7BQ (GB)**

(54) **WIRELESS COMMUNICATION TERMINAL, WIRELESS COMMUNICATION DEVICE, AND WIRELESS COMMUNICATION METHOD**

(57) The present technology relates to a wireless communication terminal, a wireless communication device, and a wireless communication method enabling transmission of data traffic requiring immediate sending with low delay.

In a wireless communication terminal, a data unit is generated including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device, and the generated data unit is sent to the wireless communication device. The present technology can be applied to a wireless communication system.

*FIG. 8*

**Description**

TECHNICAL FIELD

The present technology relates to a wireless communication terminal, a wireless communication device, and a wireless communication method, and particularly relates to a wireless communication terminal, a wireless communication device, and a wireless communication method capable of transmitting, with low delay, data traffic requiring immediate sending.

BACKGROUND ART

In IEEE 802.11 task group (TG) be, achieving low delay for industrial wireless communication is attracting attention. In particular, in uplink (UL) transmission that is transmission from a user terminal (station: STA) such as a sensor terminal to an access point (access point: AP) that is a base station, it is necessary to transmit, with low delay, information requiring immediacy such as a control signal of a device.

A main delay factor in a wireless LAN is caused by carrier sense multiple access with collision avoidance (CSMA/CA), and is mainly caused by extension of a sending standby time due to packet collision or the like.

In general, improvement of the number of parallel transmissions is mentioned as a technique for achieving low delay in wireless communication. For example, in IEEE 802.11 ax, parallel transmission is improved by orthogonal frequency division multiplexing access (OFDMA) or multi-user (MU) multiple-input multiple-output (MIMO). Note that, in parallel transmission, the STA cannot perform multiplex transmission unless immediately after a trigger signal whose notification is provided from the AP.

In addition, non-orthogonal multiple access (NOMA) is attracting attention as a technique for further improving the number of parallel transmissions.

In NOMA, it is possible to multiplex signals by performing semi-orthogonalization in a domain such as an interleaving pattern or a scrambler pattern in addition to a power domain. However, since the multiplexed signal has a small signal-to-interference ratio (SIR), there is a characteristic where the AP that is a reception terminal is required to have an advanced interference cancellation function, and the STA that is a sending terminal is required to perform transmission with a low-efficiency modulated signal, such as binary phase shift keying (BPSK). As a result, the STA can improve the number of parallel transmissions to perform UL transmission, and can achieve low delay.

For example, Patent Document 1 mentions power-domain multiplexing NOMA in a cellular network.

CITATION LIST

PATENT DOCUMENT

Patent Document 1: Japanese Unexamined Patent Application Publication No. 2019-520728

SUMMARY OF THE INVENTION

PROBLEMS TO BE SOLVED BY THE INVENTION

In the technology described in Patent Document 1, in the power-domain multiplexing NOMA in UL transmission, an STA randomly determines sending electric power by using a control signal from an AP. In such a case, if the number of STAs that simultaneously perform sending is large or electric power set by each STA is not optimized, an SIR may not satisfy a threshold value necessary for interference cancellation in the AP as a reception side in the UL transmission.

That is, the STA can send a signal at any timing without synchronization between the STAs on the sending side, but there is a possibility that, as a result, the signal cannot be correctly demodulated and received at the AP and the signal cannot be transmitted without errors. This is because parameters (electric power, an interleaving pattern, a scrambler pattern, and the like) used by each STA in NOMA are not known between the STAs that simultaneously perform sending. Therefore, as a result, there has been a possibility that data traffic requiring immediate sending cannot be transmitted with low delay.

The present technology has been made in view of such a situation, and makes it possible to transmit, with low delay, data traffic requiring immediate sending.

SOLUTIONS TO PROBLEMS

A wireless communication terminal according to a first aspect of the present technology includes: a generation unit configured to generate a data unit including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device; and a wireless control unit configured to cause sending of the data unit generated by the generation unit to the wireless communication device.

A wireless communication device according to a second aspect of the present technology includes: a wireless control unit configured to cause sending of information regarding a non-orthogonal multiple access scheme to a wireless communication terminal; and a reception unit configured to receive a data unit being sent by the wireless communication terminal with the non-orthogonal multiple access scheme applied, on the basis of information regarding the non-orthogonal multiple access scheme.

In the first aspect of the present technology, a data unit is generated including, in a preamble, position information indicating a position of a midamble and parameter information of a non-orthogonal multiple access scheme that is used by the wireless communication terminal in a multi-domain of the non-orthogonal multiple access scheme to be applied to sending to the wireless communication device, and the generated data unit is sent to the wireless communication device.

In the second aspect of the present technology, information regarding a non-orthogonal multiple access scheme is sent to the wireless communication terminal, and a data unit being sent by the wireless communication terminal with the non-orthogonal multiple access scheme applied, on the basis of the information regarding the non-orthogonal multiple access scheme is received.

BRIEF DESCRIPTION OF DRAWINGS

Fig. 1 is a view illustrating an example of conventional UL MU transmission.
Fig. 2 is a view illustrating another example of conventional UL MU transmission.
Fig. 3 is a view illustrating a configuration example of a wireless communication system according to an embodiment of the present technology.
Fig. 4 is a block diagram illustrating a configuration example of a wireless communication device.
Fig. 5 is a view illustrating a sequence for explaining overall processing of the wireless communication system.
Fig. 6 is a view illustrating a configuration example of a frame whose notification is provided as capability information.
Fig. 7 is a view illustrating a configuration example of a frame whose notification is provided as scheduling information.
Fig. 8 is a view illustrating a sequence of NOMA transmission.
Fig. 9 is a view illustrating a configuration example of a PPDU #1.
Fig. 10 is a view illustrating a configuration example of a PPDU #2.
Fig. 11 is a view illustrating an example of internal processing of an STA #2.
Fig. 12 is a table illustrating information whose notification is provided between a PHY Layer and a MAC Sublayer.
Fig. 13 is a block diagram illustrating a configuration example of a computer.

MODE FOR CARRYING OUT THE INVENTION

Hereinafter, a mode for carrying out the present technology will be described. The description will be given in the following order.

1. Conventional Technology
2. Embodiments
3. Others

<1. Conventional Technology>

In an unlicensed band of a wireless local area network (LAN), in one basic service set (BSS), an AP and an STA autonomously obtain a sending right in the BSS and perform communication.

In recent years, there is an increasing demand for low-delay transmission from user terminals and sensor terminals, for example, factory automation (automation of a factory) and real-time transmission to a remote location.

In particular, in a wireless local area network (LAN), CSMA/CA is adopted as an access scheme for the purpose of reducing interference with peripheral terminals located around a sending terminal that sends a signal. However, before the sending terminal sends a signal, in a case where a peripheral terminal is sending a wireless signal, the sending terminal refrains from sending the signal until the sending of the wireless signal is completed. Therefore, even if data traffic requiring immediate sending occurs, latency time occurs.

Generally, transmission from an STA to an AP is referred to as UL transmission, and transmission from an AP to an STA is referred to as downlink (DL) transmission. A data size in the UL transmission is relatively smaller than a data size in the DL transmission. For this reason, as a technique of shortening latency time in the UL transmission, the above-described UL MU transmission is effective, and UL OFDMA and UL MU-MIMO are focused in IEEE 802.11 TG ax.

However, in a case where the access scheme of CSMA/CA is assumed, the above-described technology cannot be implemented unless notification of a Trigger signal for inducing UL transmission is provided in advance from the AP. This is because, when signals from a plurality of STAs are separated in an AP that is a reception terminal of UL transmission, data lengths (or PHY protocol data unit (PPDU) lengths) need to be aligned, frequencies need to be synchronized among the plurality of STAs, and notification of an encoding scheme (modulation and coding scheme (MCS)) used by each STA in UL transmission needs to be provided in advance.

<Example of conventional UL MU transmission>

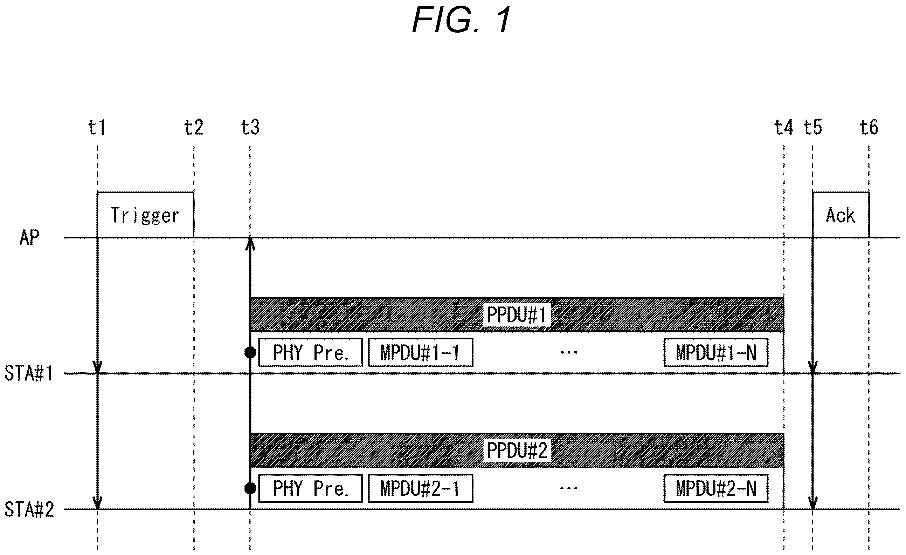

Fig. 1 is a view illustrating an example of conventional UL MU transmission.

In Fig. 1, a horizontal axis represents time. Note that the present specification describes an example in which a medium access control (MAC) frame is transmitted in a PPDU format that is added with a PHY preamble (PHY Pre.), a PHY header, a packet extension (PE) and the like. In the case of Fig. 1, a PPDU #1 which is a data frame in the PPDU format includes PHY Pre. and MPDU #1-1 to MPDU #1-N, and a PPDU #2 includes PHY Pre. and MPDU #2-1 to MPDU #2-N.

An AP starts notification of a Trigger frame to an STA #1 and an STA #2 at time t1 in Fig. 1, and ends the notification of the Trigger frame at time t2.

At time t3 after receiving the Trigger frame, the STA #1 and the STA #2 start simultaneously sending the PPDU #1 and the PPDU #2 to the AP, respectively, and end the sending of the PPDU #1 and the PPDU #2 at time t4.

At time t5 after receiving the PPDU #1 and the PPDU #2, the AP sends an ACK (Acknowledgemant) frame, which is a reception acknowledgement for the PPDU #1 and the PPDU #2, to the STA #1 and the STA #2. At time t6, the sending of the ACK frame is ended.

As described above, the Trigger frame includes a reference signal for performing frequency synchronization in the STAs, and also includes MCS and a PPDU length applied in each PPDU, information for determining sending electric power applied by each STA, and the like.

In such UL ML transmission, it is necessary to efficiently determine STAs that simultaneously perform sending (subjected to multiplexing). The AP determines the STAs subjected to multiplexing on the basis of an amount of data traffic held by each STA. For example, the AP can estimate data traffic held by each STA by receiving, from each STA, notification in advance of a buffer statuts (BS) report frame that is for notifying of the data traffic held by each STA.

Such notification of the BS report frame enables avoidance of a sending request to the STA that does not hold data traffic, so that the UL MU transmission can be performed with high frequency utilization efficiency. However, in a case where data traffic requiring immediate sending occurs after the sending of the BS report frame, the sending request cannot be necessarily performed to the STA holding the data traffic.

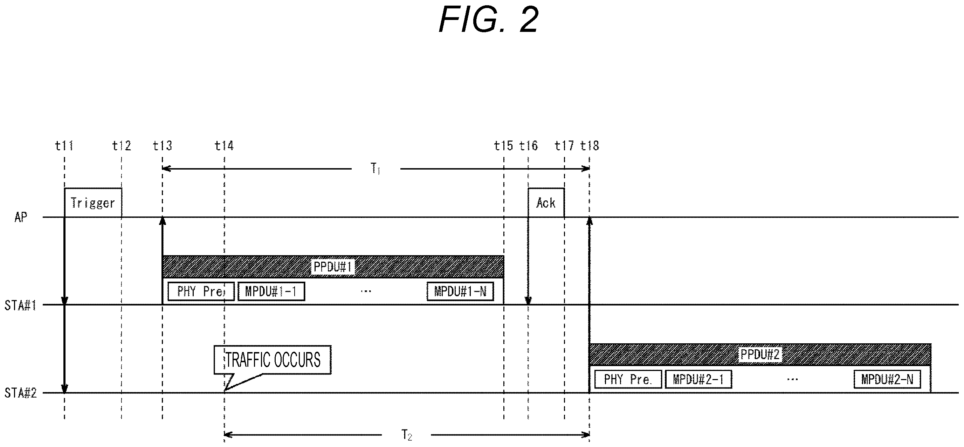

Fig. 2 is a view illustrating another example of conventional UL MU transmission.

An AP starts notification of a Trigger frame to the STA #1 and the STA #2 at time t11 in Fig. 2, and ends the notification of the Trigger frame at time t12.

At time t13 after receiving the Trigger frame, the STA #1 starts sending the PPDU #1 to the AP, and ends the sending of the PPDU #1 at time t15.

In the case of Fig. 2, the Trigger frame does not include information indicating sending permission for the STA #2. Therefore, the STA #2 does not send the PPDU #2 at time t13. Furthermore, even if traffic occurs in the STA #2 at time t14 after the sending of the Trigger frame, the STA #2 cannot immediately send the PPDU #2.

At time t16 after receiving the PPDU #1, the AP sends an ACK frame as a reception acknowledgement for the PPDU #1, to the STA #1. At time t17, the sending of the ACK frame is ended.

With respect to the traffic that has occurred at time t14, as illustrated in Fig. 2, the STA #2 cannot start sending of the PPDU #2 to the AP unless after time t18 which is after an end of transmission time $T_1$ between the STA #1 and the AP. That is, the STA #2 cannot start sending of the PPDU #2 until time t18, which is a time delayed by time $T_2$ from the occurrence of traffic.

Therefore, attention has been focused on simultaneous multiple access using the NOMA described above.

In NOMA, as described above, it is possible to perform multiplexing by semi-orthogonalization of signals in domains such as an interleaving pattern and a scrambler pattern, in addition to a power domain. However, since a multiplexed signal has a small SIR, there is a characteristic where an AP as a reception terminal is required to perform an advanced interference cancellation function, and an STA as a sending terminal is required to perform transmission by a low-efficiency modulated signal such as BPSK. As a result, in NOMA, an upper limit of the number of parallel transmissions can be increased as compared with OFDMA and MU-MIMO.

Furthermore, as described above, Patent Document 1 mentions transmission using NOMA in UL transmission, and mentions that an STA randomly determines sending electric power by using a control signal from an AP. In such a case, if the number of STAs that simultaneously perform sending is large or electric power set by each STA is not optimized, an SIR may not satisfy a threshold value necessary for interference cancellation in the AP as the reception side in the UL transmission. At this time, the STA can send a signal at any timing, but there is a possibility that, as a result, the STA cannot correctly demodulate and receive the signal in the AP and the data signal cannot be transmitted without errors.

Furthermore, in particular, in IEEE 802.11, a reference signal necessary for demodulating a received signal in the AP on a reception side is sent at the same time as received data. However, in a case where the AP on the reception side demodulates received signals from a plurality of STAs, these reference signals need to be aligned at the same time. This is because, in a case where an OFDM symbol arrives from a plurality of STAs at the same time, propagation path information in a frequency domain cannot be correctly demodulated unless a guard interval (GI) unit is aligned. Note that, against this background, in IEEE 802.11, in a case where the AP simultaneously receives signals from a plurality of STAs, the AP provides the STA with notification of a trigger signal for inducing sending immediately before.

From the above, in the conventional technology, there has been a possibility that data traffic requiring immediate sending cannot be transmitted with low delay.

Therefore, in the present technology, a data unit is generated including, in a preamble, position information indicating a position of a midamble and parameter information of a non-orthogonal multiple access scheme used by a wireless communication terminal in a multi-domain of the non-orthogonal multiple access scheme that is applied to sending to a wireless communication device. Then, the generated data unit is sent to the wireless communication device.

Therefore, a degree of freedom of a sending time of the wireless communication terminal can be improved. As a result, data traffic requiring immediate sending can be transmitted with low delay.

Hereinafter, an embodiment of the present technology will be described in detail.

<2. Embodiment>

<Wireless communication system of present technology>

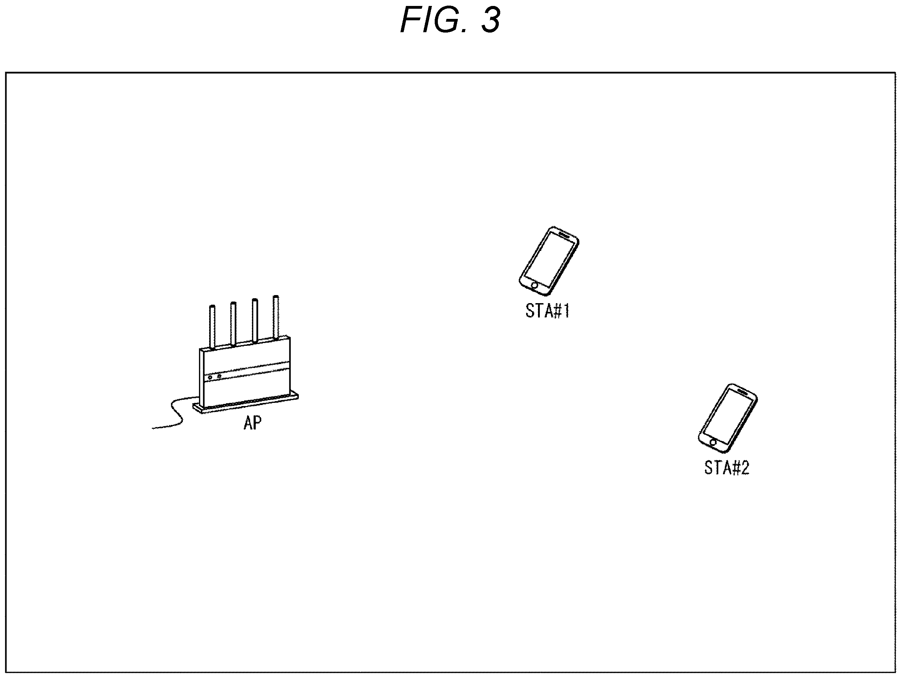

Fig. 3 is a view illustrating a configuration example of a wireless communication system according to an embodiment of the present technology.

The wireless communication system in Fig. 3 includes one access point (access point: AP) and the STA #1 and the STA #2 that are a plurality of terminals (stations: STAs), which are present in one basic service set (BSS).

In Fig. 3, two STAs of the STA #1 and the STA #2 are illustrated, but the number of STAs may be three or more. Hereinafter, for convenience of description, a case where there are two STAs of the STA #1 and the STA #2 will be described as an example, but the description similarly applies to a case where there are three or more STAs.

<Configuration Example of Wireless Communication Device>

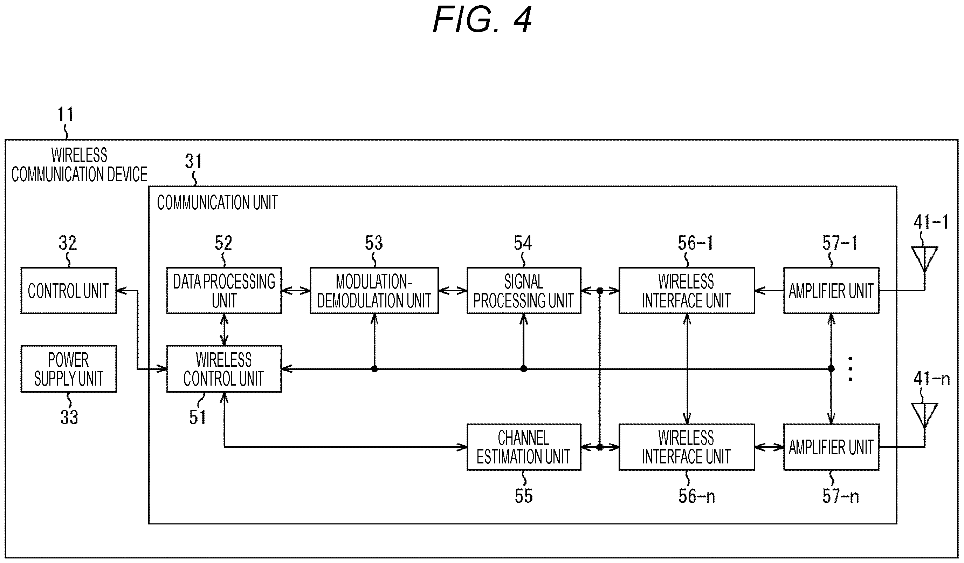

Fig. 4 is a block diagram illustrating a configuration example of a wireless communication device.

A wireless communication device 11 illustrated in Fig. 4 is a wireless communication device that operates as an AP or an STA.

The wireless communication device 11 is constituted from a communication unit 31, a control unit 32, a power supply unit 33, and antennas 41-1 to 41-n. In a case where it is not necessary to distinguish between the antennas 41-1 to 41-n, the antennas 41-1 to 41-n will be collectively referred to as antennas 41.

The wireless communication device 11 may have a configuration including a plurality of communication units 31.

The communication unit 31 sends and receives data. The communication unit 31 has a configuration including a wireless control unit 51, a data processing unit 52, a modulation-demodulation unit 53, a signal processing unit 54, a channel estimation unit 55, wireless interface units 56-1 to 56-n, and amplifier units 57-1 to 57-n.

Note that the wireless interface units 56-1 to 56-n and the amplifier units 57-1 to 57-n will be collectively referred to as wireless interface units 56 and amplifier units 57, respectively, in a case where it is not necessary to distinguish between the wireless interface units 56-1 to 56-n and the amplifier units 57-1 to 57-n.

The wireless control unit 51 transfers information between the individual units constituting the communication unit 31. In addition, the wireless control unit 51 performs parameter setting for the modulation-demodulation unit 53 and the signal processing unit 54, packet scheduling for the data processing unit 52, parameter setting and sending electric power control for the wireless interface units 56 and the amplifier units 57.

In CSMA/CA, it is necessary to confirm that reception electric power of all received signals measured in the device before sending a signal falls within a certain threshold value or less. A unit that measures the reception electric power may be the wireless interface unit 56, the signal processing unit 54, or the modulation-demodulation unit 53, but a measurement result of the reception electric power is supplied to the wireless control unit 51.

As an information format of the measurement result of the reception electric power, for example, PHY-CCA.indication disclosed in 802.11-2016 - IEEE Standard for Information technology - Telecommunications and information exchange between systems Local and metropolitan area networks-Specific requirements - Part 11: Wireless LAN Medium Access Control (MAC) and Physical Layer (PHY) Specifications (hereinafter, referred to as Cited Document 1) or the like is used.

At the time of sending, the data processing unit 52 generates a packet for wireless sending from data supplied from a protocol upper layer such as a network layer, and carries out data processing such as attaching a header for media access control (MAC) or attaching an error detection code. The data processing unit 52 outputs the data after the data processing to the modulation-demodulation unit 53.

At the time of reception, the data processing unit 52 carries out data processing such as MAC header analysis, packet error detection, and reorder processing on a symbol stream supplied from the modulation-demodulation unit 53, and outputs the data after the data processing to the protocol upper layer.

Note that, at the time of reception, information necessary for the data processing unit 52 to analyze a MAC header and the like may be supplied to the data processing unit 52 from the modulation-demodulation unit 53, the signal processing unit 54, or the wireless interface unit 56. The information necessary to analyze the MAC header and the like may be, for example, a parameter indicating a frame format of a received signal. Furthermore, PHY-RXSTART.indication (or RXVECTOR) disclosed in Cited Document 1 is used as an information format of the parameter indicating the frame format of the received signal.

At the time of sending, the modulation-demodulation unit 53 encodes, interleaves, and modulates data supplied from the data processing unit 52 on the basis of setting information set by the control unit 32 or the wireless control unit 51, and generates a data symbol stream to supply the generated data symbol stream to the signal processing unit 54.

The setting information set by the control unit 32 or the wireless control unit 51 includes an encoding scheme, a modulation scheme, and the like, but also includes information described in a preamble of a sent signal in addition to these. This setting information may be supplied to the modulation-demodulation unit 53 from any of the control unit 32, the wireless control unit 51, or the data processing unit 52. Note that, as an information format of the setting information, PHY-TXSTART.request (or TXVECTOR) disclosed in Cited Document 1 is used.

At the time of reception, the modulation-demodulation unit 53 performs processing opposite to the processing at the time of sending, on the data symbol stream supplied from the signal processing unit 54, and outputs the processed data symbol stream to the data processing unit 52 and the control unit 32.

At the time of sending, the signal processing unit 54 performs signal processing intended for space separation, on the data symbol stream supplied from the modulation-demodulation unit 53, as necessary, and outputs one or more sending symbol streams obtained as a result of the signal processing to each wireless interface unit 56. Note that, at that time, instead of space separation, sending with any delay amount assigned to each antenna 41 (hereinafter, CSD: cyclic shift delay) may be applied to the sending.

At the time of reception, the signal processing unit 54 performs signal processing on a reception symbol stream supplied from each wireless interface unit 56, and performs space separation for the stream as necessary to output the stream to the modulation-demodulation unit 53.

The channel estimation unit 55 calculates complex channel gain information on a propagation path from a preamble part and a training signal part of the signal supplied from each wireless interface units 56. The calculated complex channel gain information is used for demodulation processing in the modulation-demodulation unit 53 and space separation in the signal processing unit 54 via the control unit 32.

At the time of sending, the wireless interface unit 56 converts the sending symbol stream supplied from the signal processing unit 54 into an analog signal, carries out filtering, up-conversion to a carrier frequency, and phase control, and outputs the analog signal after the phase control to the antenna 41 or the amplifier unit 57.

At the time of reception, the wireless interface unit 56 performs phase control, down-conversion, and inverse filtering on the analog signal supplied from the antenna 41 or the amplifier unit 57 and outputs the reception symbol stream that is a result of conversion into a digital signal to the signal processing unit 54 or the channel estimation unit 55.

At the time of sending, the amplifier unit 57 amplifies the analog signal supplied from the wireless interface unit 56 to a predetermined electric power, and outputs the analog signal with the amplified electric power to the antenna 41.

At the time of reception, the amplifier unit 57 amplifies the analog signal supplied from the antenna 41 to a predetermined electric power, and outputs the analog signal with the amplified electric power to the wireless interface unit 56.

A part of the function of the amplifier unit 57 may be included in the wireless interface unit 56. In addition, a part of the function of the amplifier unit 57 may work as a component outside the communication unit 31.

The control unit 32 is constituted by a central processing unit (CPU), a read only memory (ROM), a random access memory (RAM), and the like. The control unit 32 executes a program stored in the ROM or the like and controls the wireless control unit 51 and the power supply unit 33. In addition, the control unit 32 may perform a part of the operation of the wireless control unit 51 in place of the wireless control unit 51. In addition, the wireless control unit 51 and the control unit 32 may be configured as one block.

The power supply unit 33 includes a battery power supply or a fixed power supply and supplies electric power to each unit of the wireless communication device 11.

Note that the antenna 41, the amplifier unit 57, and the wireless interface unit 56 may form one set for each having the same branch number, and two or more sets may be components of the wireless communication device 11. In addition, the communication unit 31 is implemented by one or more large scale integrated circuits (LSIs).

<Example of Overall Processing Sequence>

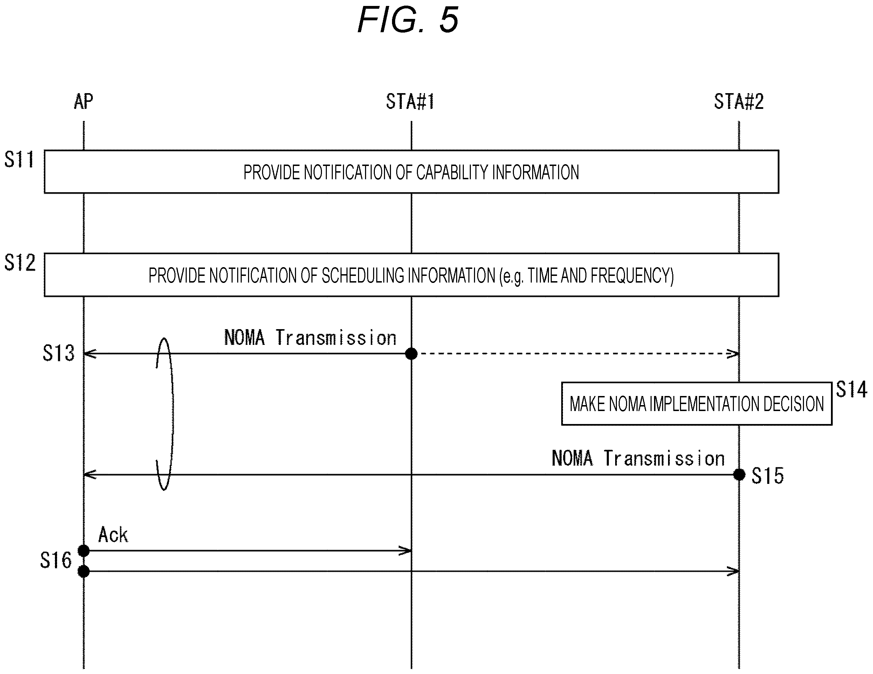

Fig. 5 is a view illustrating a sequence explaining overall processing of the wireless communication system in the embodiment of the present technology.

In step S11, the AP, the STA #1, and the STA #2 mutually provide notification of capability information including information such as capability of each device.

In step S12, the AP provides the STA #1 and the STA #2 with notification of scheduling information including information such as time and frequency resources in which transmission to which NOMA is applied can be performed, on the basis of the capability information whose notification is mutually provided.

In steps S13 to S15, the STA #1 and the STA #2 perform NOMA transmission, which is UL transmission to which NOMA is applied, to the AP.

Specifically, in step S13, the STA #1 performs NOMA transmission to the AP and the STA #2. In step S14, the STA #2 receives a frame sent in NOMA Transmission of the STA #1, and makes NOMA implementation decision on the basis of the received frame. In a case where it is decided in step S14 that NOMA is to be implemented, the STA #2 performs NOMA transmission to the AP in step S15.

After NOMA Transmission by the STA #1 and the STA #2, in step S16, the AP individually sends Ack, which is a reception acknowledgement, to the STA #1 and the STA #2.

In step S16, the STA #1 and the STA #2 receive the Ack being sent from the AP. Thereafter, the overall processing is ended.

Note that the notification of the scheduling information in step S12 may be omitted. At that time, the STA #1 and the STA #2 refer to the capability information whose notification is mutually provided. In Fig. 5, NOMA Transmission in and after step S13 is performed after notification of the scheduling information in step S12, but other information may be sent between steps S12 and S13.

Furthermore, the sending of the Ack in step S16 may be performed by using an Ack frame or a Block Ack frame disclosed in Cited Document 1, but may not be performed in a case where data in a frame sent in NOMA Transmission does not require a reception acknowledgement.

Information notification for determining whether to send the Ack may be performed in other than the transmission illustrated in Fig. 5, but similar information may be included in a frame whose notification is provided by NOMA Transmission.

Hereinafter, the processing in each step in Fig. 5 will be specifically described.

<Notification of capability information>

In the notification of the capability information in step S11 in Fig. 5, notification of information regarding capability of the own device is mutually performed between the AP and each STA. The capability referred to herein is, but not limited to, capability of the device to implement NOMA or a multi-domain for which NOMA can be implemented.

The notification of the capability information may be included in, for example, a beacon signal periodically issued by each device or information notification (assocoation) for establishing a connection between devices after the beacon signal, and carried out.

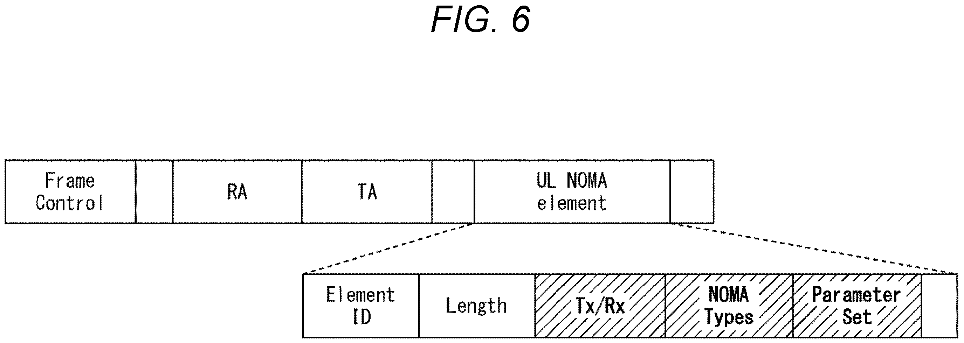

Fig. 6 is a view illustrating a configuration example of a frame whose notification is provided as the capability information.

The frame in Fig. 6 includes Frame Control, a receiving STA address (RA), a transmitting STA address (TA), and a UL NOMA element. Note that the components are not restricted only to these. In addition, hatching in Fig. 6 indicates a field including information that is characteristic in the present technology. This similarly applies to the following drawings.

The Frame Control includes information indicating that this frame is a frame whose notification is provided as the capability information.

The RA and the TA include information indicating a destination device and a sending source device, respectively. For example, a device-specific MAC address may be indicated in the RA and the TA.

The UL NOMA element includes information indicating a NOMA scheme or a NOMA parameter applicable to a device itself that sends a frame. The NOMA scheme includes a power-domain NOMA scheme, an interleaved-domain NOMA scheme, a scrambled-domain scheme, and the like. In the information indicating a NOMA parameter, the NOMA parameter indicates a value or a sequence used in a multi-domain (a power domain, an interleaved domain, a scrambled domain, and the like) in the NOMA scheme.

The UL NOMA element includes individual fields of Element ID, Length, Tx/Rx, NOMA Types, and Parameter Set.

The Element ID includes information indicating that the element is the UL NOMA element.

The Length includes information indicating a bit length of the UL NOMA element.

The Tx/Rx includes information indicating whether the device that sends the frame can perform sending and reception by using the NOMA scheme.

The NOMA Types includes information indicating a NOMA scheme applicable to the device that sends the frame.

The Parameter Set includes information indicating a NOMA parameter applicable to the device that sends the frame.

Note that, in a case where there is a plurality of applicable NOMA schemes in the NOMA Types, Parameter Set fields corresponding to individual NOMA schemes may be present.

In addition, the Tx/Rx field indicates information indicating that both sending and reception are possible by using the NOMA scheme. However, in a case where NOMA schemes applicable in sending and reception are different, the NOMA Types field may be defined for each of sending and reception. Furthermore, similarly, the Parameter Set field may also be defined for each of these NOMA Types fields.

As a specific example, the NOMA Types field may include information indicating a domain to which NOMA can be applied among the power domain, the interleaved domain, and the scrambled domain.

Furthermore, for example, in a case where the NOMA Type field indicates that NOMA can be applied in the interleaved domain, information indicating a usable interleaving pattern may be included. In a case where the NOMA Type field indicates NOMA is applicable in the power domain, information indicating a resolution, an upper limit, or a lower limit of controllable sending electric power, or the like may be included.

<Notification of scheduling information>

In step S11 in Fig. 5, after the notification of the capability information is performed in the AP, the STA #1, and the STA #2, in step S12, the AP provides the STA #1 and the STA #2 with notification of scheduling information including information such as time and frequency resources in which transmission to which NOMA is applied can be performed, on the basis of the capability information.

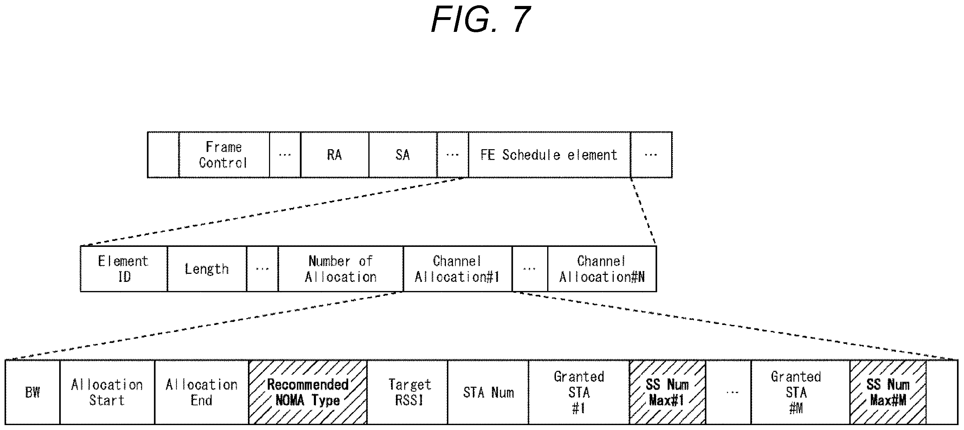

Fig. 7 is a view illustrating a configuration example of a frame whose notification is provided as the scheduling information.

The frame in Fig. 7 includes Frame Control, RA, TA, and a further enhanced (FE) schedule element. Note that the components are not restricted only to these. Note that, hereinafter, i and k represent any integers.

The Frame Control includes information indicating that this frame is a frame whose notification is provided as the scheduling information.

The RA and the TA include information indicating a sending source device and a destination device, respectively.

The FE Schedule element includes information indicating time and frequency resources in which NOMA may be applied.

The FE Schedule element includes individual fields of Element ID, Length, Number of Allocation, and Channel Allocation #1 to Channel Allocation #N.

The Element ID includes information indicating that the element is the FE Schedule element.

The Length includes information indicating a bit length or an octet length of the FE Schedule element.

The Number of Allocation includes information indicating the number (in the case of Fig. 7, N) of subsequent Channel Allocation fields.

Channel Allocation #i includes information regarding a time at which transmission to which NOMA is applied in a specific frequency resource may be performed and a NOMA scheme that may be applied.

The Channel Allocation #i includes individual subfields of BW, Allocation Start, Allocation End, Recommend NOMA Type, Target RSSI, STA Num, Granted STA #1, spacial stream (SS) Num Max #1, ..., Granted STA #M, and SS Num Max #M.

The BW includes information indicating a target frequency resource indicated by the Channel Allocation.

The Allocation Start includes information indicating a start time of a period (time resource) in which transmission to which NOMA is applied may be performed.

The Allocation End includes information indicating an end time of a period (time resource) in which transmission to which NOMA is applied may be performed.

The Recommended NOMA Type includes information indicating a recommended NOMA scheme that may be applied within time and frequency resources indicated by the BW, the Allocation Start, and the Allocation End.

The Target RSSI includes information indicating reception electric power of a preamble (or midamble) received by the AP or a target value of a received signal strength indicator (RSSI) when transmission to which NOMA is applied is performed in the time and frequency resources indicated by the BW, the Allocation Start, and the Allocation End.

The STA Num includes information indicating the number (in the case of Fig. 7, M) of subsequent Granted STA subfields.

Granted STA #k includes information (for example, an association ID (AID), a MAC address, or the like) indicating a terminal that may perform transmission to which NOMA is applied within the time and frequency resources indicated by the BW, the Allocation Start, and the Allocation End.

SS Num Max #k includes information indicating a maximum number of streams that may be used in a case where the terminal indicated by the Granted STA #k performs transmission to which NOMA is applied within the time and frequency resources indicated by the BW, the Allocation Start, and the Allocation End.

Note that the Granted STA #k may be information indicating only one device, and a sequence of reference signals to be used in a preamble or a midamble when transmission to which NOMA is applied (NOMA transmission) is performed may be determined on the basis of the information indicated by SS Num #1 to SS Num #k.

For example, in a case where there are a maximum of eight patterns of sequences of reference signals (long training field (LTF)) for channel estimation in the preamble, terminals that perform transmission with NOMA applied send reference signals of sequences different from each other. At this time, Granted STA #3 may use a sequence of reference signals of at least one of a fourth pattern or a fifth pattern in the following cases.

In a case where information indicating "1" is included in the SS Num #1, information indicating "2" is included in the SS Num #2, and information indicating "2" is included in the SS Num #3, that is, in a case where the maximum number of streams indicated by the SS Num #k is n_k, the Granted STA #l may use a reference signal of a pattern represented by the following Expression (1).

[Equation 1]

$$\left(1+\sum_{i=1}^{l-1} n_i\right)-\text{th} \quad \text{to} \quad \left(1+\sum_{i=1}^{l} n_i\right)-\text{th} \quad \cdots (1)$$

<NOMA Transmission>

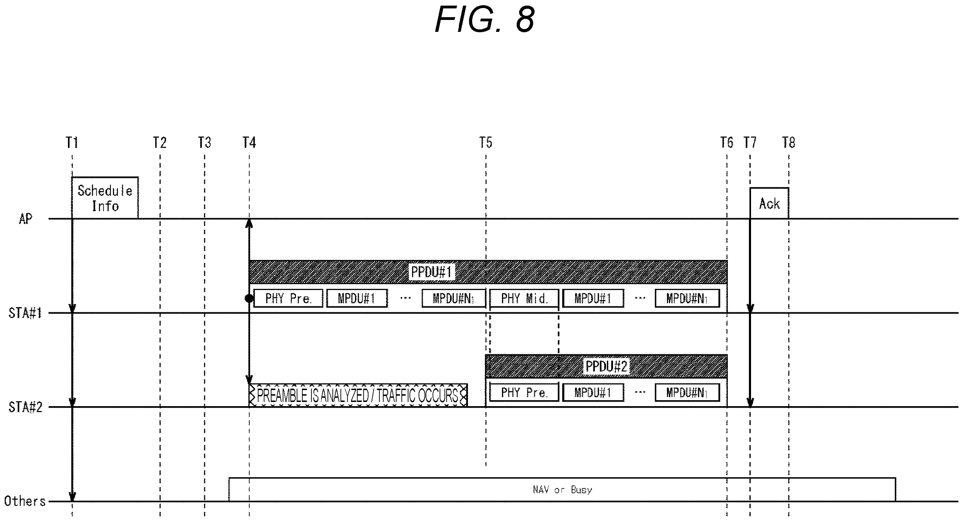

Fig. 8 is a view illustrating a sequence of NOMA Transmission performed in steps S13 to S15 in Fig. 5.

Fig. 8 illustrates a sequence in a case where notification of the scheduling information is performed first. Note that a frame whose notification is provided as the scheduling information is indicated as Schedule Info in the figure. Furthermore, in Fig. 8, Others represents any terminal other than the AP, the STA #1, and the STA #2. Hereinafter, for convenience of description, a case where there are two STAs of the STA #1 and the STA #2 will be described as an example, but the description similarly applies to a case where there are three or more STAs.

At time T1, the AP provides the STA #1, the STA #2, and the Others with notification of the scheduling information.

At time T2 to time T3, information notification may be performed by frames shown below. That is, examples of the frame include a CTS frame sent from the AP, the STA #1, or the STA #2, and a Trigger frame that induces transmission of the NOMA scheme and is sent from the AP.

In a case where notification of the scheduling information is performed prior to NOMA transmission, the STA #1 and the STA #2 are notified of specific time and frequency resources for which implementation of NOMA transmission is permitted. At this time, the Others refers to the scheduling information, enters a network allocation vector (NAV, sending prohibition period) state or a Busy state slightly before time T4 at which NOMA transmission is performed.

The STA #1 generates the PPDU #1 (first data unit) on the basis of the scheduling information. The PPDU #1 includes, for example, PHY Pre., MPDU #1 to MPDU #$N_1$, a PHY midamble (PHY Mid.), and MPDU #1 to MPDU #$N_1$.

At time T4, the STA #1 starts sending the PPDU #1, and the AP starts receiving the PPDU #1.

Furthermore, at time T4, the STA #2 receives a preamble of the PPDU #1 and analyzes the received preamble. At this time, the STA #2 makes NOMA implementation decision on the basis of the analyzed preamble and the scheduling information. For example, in a case where the STA #2 holds data traffic, for example, data traffic occurs in the STA #2, and it is decided to implement NOMA, the STA #2 starts sending the PPDU #2 (second data unit) at time T5. The PPDU #2 includes, for example, PHY Pre. and MPDU #1 to MPDU #$N_1$.

At that time, the STA #2 determines its own NOMA parameter and the like on the basis of the analyzed preamble. Note that the scheduling information may also be used for the decision and the determination described above. The STA #2 generates the PPDU #2 such that the PHY Pre. of the PPDU #2 and the PHY Mid. of the PPDU #1 have the same position and length as those received by the AP at the same time, and starts sending the PPDU #2 at such a timing that the PHY Pre. of the PPDU #2 and the PHY Mid. of the PPDU #1 are received by the AP at the same time.

The AP starts receiving the PPDU #2.

The STA #1 and the STA #2 end the sending of the PPDU #1 and the sending of the PPDU #2, respectively, at time T6. At time T6, the AP ends the reception of the PPDU #1 and the PPDU #2 being sent from the STA #1 and the STA #2.

At time T7, the AP sends an ACK frame as a reception acknowledgement for the PPDU #1 to the STA #1, and sends an ACK frame as a reception acknowledgement for the PPDU #2 to the STA #2. At time T8, the sending of the ACK frame is ended.

Note that, in the notification of the scheduling information immediately before sending of the PPDU #1, notification of the NOMA scheme that may be applied is provided in the Recommended NOMA Type subfield. However, the NOMA scheme to be applied in this PPDU may be selected from the NOMA schemes indicated in the Recommended NOMA Type subfield.

For example, information indicated in the NOMA Parameter subfield in this PPDU may be a part of information indicated in the Recommended NOMA Type subfield in a frame whose notification is provided in notification of scheduling information immediately before.

That is, when there is a plurality of STAs to which the NOMA scheme can be applied in at least one domain, the AP acquires in advance the NOMA scheme that can be used for sending by each STA, through the notification of the capability information. In addition, by notifying a connected STA of the NOMA scheme that allows multiplexing of more STAs as the scheduling information, uplink transmission with a large multiplex quantity can be realized. As a result, delay time of data traffic of each STA can be shortened.

<Configuration of PPDU #1>

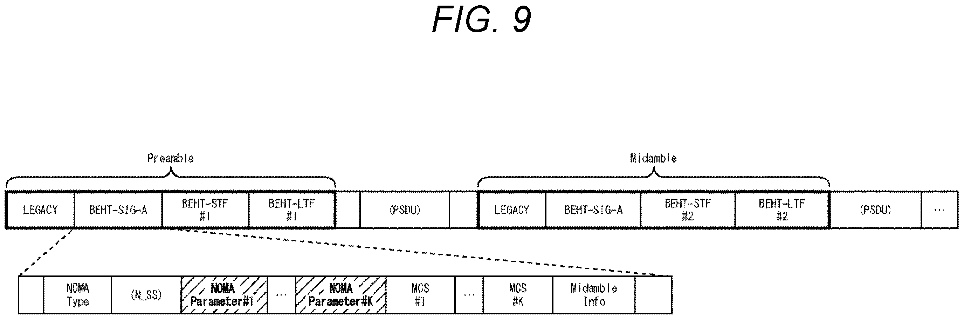

Fig. 9 is a view illustrating a configuration example of the PPDU #1.

The PPDU #1 of Fig. 9 includes LEGACY, beyond extremeley high throughput (BEHT)-signal (SIG)-A, BEHT-short training field (STF), BEHT-long training field (LTF), and PHY service data unit (PSDU). However, the components of the PPDU #1 are not limited only thereto.

Note that the PPDU #1 internally includes a preamble (Preamble: PHY Pre. of Fig. 8) including LEGACY, BEHT-SIG-A, BEHT-STF #1, and BEHT-LTF- #1 as illustrated in the figure, and a midamble (Midamble: PHY Mid. of Fig. 8) including LEGACY, BEHT-SIG-A, BEHT-STF #2, and BEHT-LTF #2. The BEHT-STF #1 and the BEHT-STF #2 may be same reference signal sequences, and similarly, the BEHT-LTF #1 and the BEHT-LTF #2 may be reference signal sequences that are same as each other.

The LEGACY includes a reference signal indicating being a data unit of a wireless LAN and a reference signal for performing time synchronization, frequency synchronization, and channel estimation, in a device that receives the data unit.

The BEHT-SIG-A includes information indicating a NOMA scheme and a NOMA parameter applied by a device that sends the PPDU #1, and a position of the midamble.

The BEHT-STF includes a reference signal for performing time synchronization and frequency synchronization with higher accuracy, separately from the LEGACY.

In addition to the LEGACY, the BEHT-LTF includes a reference signal for performing channel estimation with higher accuracy and channel estimation for each user.

Various frames may be stored in the PSDU.

Note that, in the example of Fig. 9, the BEHT-SIG-A is inserted before the BEHT-LTF #1 or the BEHT-LTF #2, but some information or a reference signal may be inserted immediately after the BEHT-LTF #1 or the BEHT-LTF #2. For example, in a case where notification of the scheduling information is performed before sending of the PPDU #1, as described above, notification of a sequence of reference signals (BEHT-LTF) for channel estimation for each user can be provided to the STA #1 and the STA #2 in advance.

Furthermore, channel estimation can be performed with high accuracy as long as the reference signal is semi-orthogonalized between the STA #1 and the STA #2. Therefore, in a case where notification of different information is provided to the AP for each STA, information between users can be separated by being inserted immediately after the BEHT-LTF field, so that information can be efficiently transmitted.

The BEHT-SIG-A includes individual fields of NOMA Type, N_SS, NOMA Parameter #i, MCS #i, and Midamble Info. Note that i represents any integer.

The NOMA Type includes information indicating a NOMA scheme applied in this PPDU. Note that the NOMA Type field is a field included only in the preamble of the STA to be sent first. The NOMA Type field is not included in the midamble, or the preamble or midamble of the STA to be sent later. In this case, another STA that performs UL sending of the NOMA scheme follows this information.

The N_SS includes information indicating the number of streams (K) being used in this PPDU.

The NOMA Parameter #i includes information indicating a NOMA parameter applied in an i-th stream.

The MCS #i includes information indicating an MCS applied in the i-th stream.

The Midamble Info includes information indicating a position of the midamble in this PPDU.

Note that a specific example of the information indicated by the NOMA parameter may be any of the following.

1. Information indicating an interleaving pattern in a case where the NOMA Type includes information indicating a NOMA scheme of the interleaved domain

2. Estimated reception electric power of the stream and an allowable interference signal level in the AP that is a desired terminal, in a case where the NOMA Type includes information indicating a NOMA scheme of the power domain

Note that Fig. 9 illustrates a case where there is one midamble, but there may be a plurality of midambles. However, in a case where information indicating a NOMA scheme in the power domain is included in the NOMA Parameter subfield, the midamble may not be present.

Furthermore, a portion to which the NOMA scheme is applied in the PPDU may be any portion other than the preamble and the midamble. This is because, in the preamble and the midamble, information (for example, a reference signal for frequency synchronization or channel estimation) to be demodulated by the reception terminal needs to be received with low interference for each user. Note that, in a case where some of information of the BEHT-SIG-A is inserted immediately after the BEHT-LTF, the NOMA scheme may be applied to this information.

<Configuration of PPDU #2>

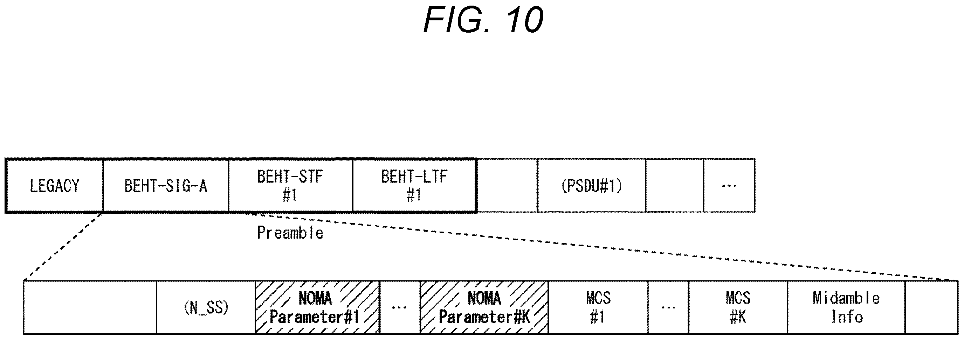

Fig. 10 is a view illustrating a configuration example of the PPDU #2.

Similarly to the PPDU #1 of Fig. 9, the PPDU #2 of Fig. 10 includes LEGACY, BEHT-SIG-A, BEHT-LTF, and PSDU.

Note that information and sequences that can be included in individual fields and subfields in the PPDU #2 are similar to those of the PPDU #1. However, a preamble and a midamble in this PPDU #2 are arranged with the same length at a position that allows the preamble and the midamble to be received at the same time as the midamble in this PPDU #1 sent from the STA #1 in the AP that receives the preamble and the midamble.

Fig. 8 described above illustrates that the midamble in the PPDU #1 sent from the STA #1 and the preamble in the PPDU #2 sent from the STA #2 are sent to the AP at the same time. However, in the PPDU #1, in a case where the midamble is present at a time later than the preamble of the PPDU #2, the midamble of the PPDU #2 is arranged so as to be sent at the same time as the midamble.

<Internal processing of STA #2>

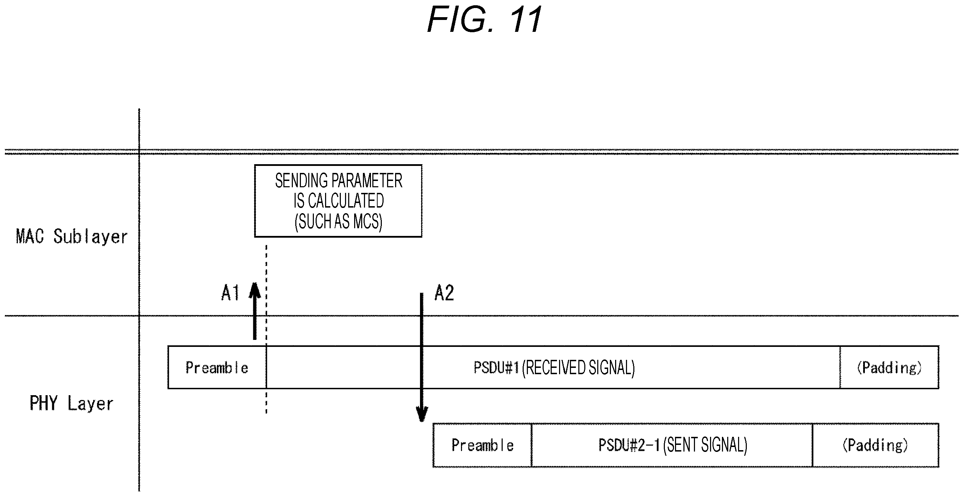

Fig. 11 is a view illustrating an example of internal processing in a case where the STA #2 analyzes the PPDU #1 sent by the STA #1, and transmits the PPDU #2 by using the NOMA scheme.

In Fig. 11, the PPDU #1 includes Preamble, PSDU #1 that is a received signal, and Padding. The PPDU #2 includes Preamble, PSDU #2 that is a sent signal, and Padding.

In Fig. 11, a layer having at least functions of the wireless interface unit 56, the signal processing unit 54, the channel estimation unit 55, and the modulation-demodulation unit 53 is referred to as a PHY layer, and a layer having at least a function of the data processing unit 52 is referred to as a MAC sublayer.

When the STA #2 receives the preamble of the PPDU #1, the PHY Layer notifies the MAC Sublayer of RXVECTOR, which is information analyzed in the PHY Layer, as indicated by an arrow A1.

Whereas, when the STA #2 generates the PPDU #2, the MAC Sublayer notifies the PHY Layer of TXVECTOR, which is information regarding the PPDU #2 and generated by the PHY Layer, as indicated by an arrow A2.

As described above with reference to Fig. 4, the RXVECTOR and the TXVECTOR are information formats disclosed in Cited Document 1, and are collectively referred to as primitive.

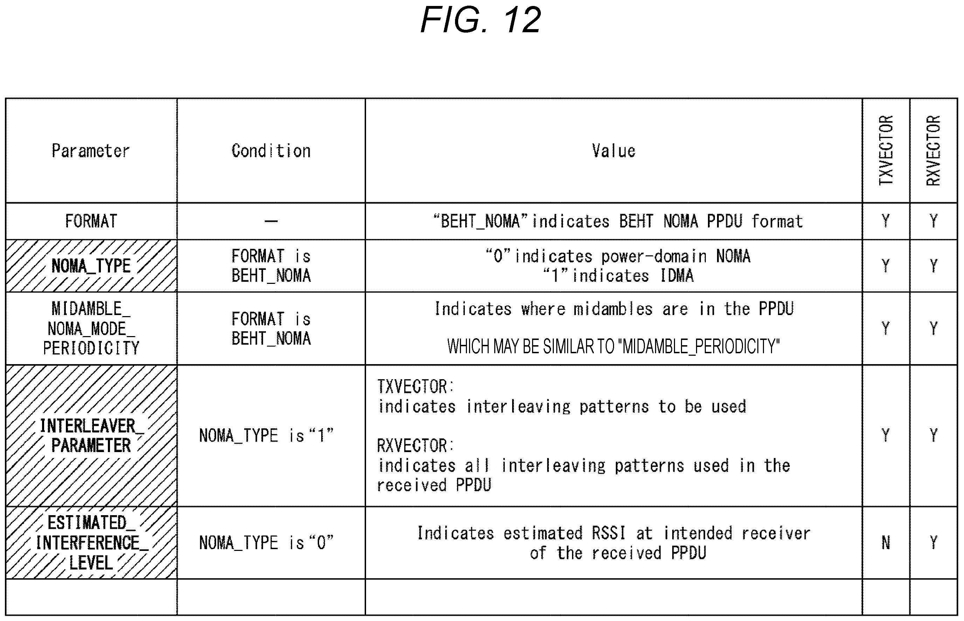

Fig. 12 is a table illustrating information (Parameter, Condition, and Value) included in the primitive whose notification is provided between the PHY Layer and the MAC Sublayer.

In Fig. 12, a column of each primitive (the TXVECTOR and the RXVECTOR) is illustrated on a left side of each piece of information. Y (YES) is indicated in the column of the TXVECTOR on the left side of the Parameter included in the TXVECTOR, while N (NO) is indicated in the column of the TXVECTOR on the left side of the Parameter not included in the TXVECTOR. Similarly, Y is indicated in the column of the RXVECTOR on the left side of the Parameter included in the RXVECTOR, while N is indicated in the column of the RXVECTOR on the left side of the Parameter not included in the RXVECTOR.

In the Prameter of "FORMAT", the Value may be "BEHT_NOMA", which indicates a format of a BEHT PPDU (indicates BEHT NOMA PPDU format). The Prameter of the "FORMAT" is included in the TXVECTOR and the RXVECTOR. Note that the BEHT PPDU is a PPDU including the BEHT-SIG-A, the BEHT-STF, and the BEHT-LTF as illustrated in Figs. 9 and 10.

The Prameter of "NOMA_TYPE" is present in a case where a condition (Condition) in which "Format" is the "BEHT_NOMA" is satisfied. At this time, the Prameter of the "NOMA_TYPE" includes information indicating which non-orthogonal multiplexing the corresponding PPDU is. For example, as illustrated in Fig. 12, a case of including "0" may indicate NOMA (power-domain NOMA) of the power domain, and a case of including "1" may indicate NOMA (interleave division multiple access: IDMA) by the interleaved domain. The "NOMA_TYPE" is a parameter included in the TXVECTOR and the RXVECTOR in a case where the above-described condition is satisfied.

The Parameter of "MIDAMBLE_NOMA_MODE_PERIODICITY" is present in a case where a condition (Condition) in which the "Format" is the "BEHT_NOMA" is satisfied. At this time, information indicating where a midamble (Midamble) is placed in the PPDU is included in the corresponding PPDU. The "MIDAMBLE_NOMA_MODE_PERIODICITY" is a parameter included in the TXVECTOR and the RXVECTOR in a case where the above condition is satisfied.

"INTERLEAVER_PARAMETER" is present in a case where a condition (Condition) in which the "NOMA_TYPE" indicates IDMA is satisfied. Fig. 12 illustrates an example in which IDMA is indicated in a case where "1" is included in "NOMA TYPE". At this time, information indicating where a midamble (Midamble) is placed is included in the corresponding PPDU. The "INTERLEAVER_PARAMETER" may be included in both the TXVECTOR and the RXVECTOR. In a case of being included in the TXVECTOR, the "INTERLEAVER_PARAMETER" includes information indicating an interleaving pattern to be used at the time of sending. Whereas, in a case of being included in the RXVECTOR, the "INTERLEAVER_PARAMETER" includes information indicating an interleaving pattern applied to the received PPDU.

The Parameter of "ESTIMATED_INTERFERENCE_LEVEL" is present in a case where a condition (Condition) in which the "NOMA_TYPE" indicates NOMA in the power domain is satisfied. Fig. 12 illustrates an example in which NOMA of the power domain is indicated in a case where "0" is included in "NOMA TYPE". Therefore, in a case where "0" is included in "NOMA TYPE" in the RXVECTOR, the "ESTIMATED_INTERFERENCE_LEVEL" is present. The "ESTIMATED_INTERFERENCE_LEVEL" includes information indicating a received singnal strength indicator (RSSI) estimated when the corresponding PPDU is received.

Hereinafter, the internal processing of Fig. 11 will be described in detail with reference to Fig. 12.

<Notification of RXVECTOR>

The PHY Layer that has received the PPDU #1 including the Preamble, the PSDU, and Padding analyzes the Preamble in the PPDU #1, and notifies the MAC sublayer of the RXVECTOR as indicated by an arrow A1.

The RXVECTOR includes each Parameter of the FORMAT, NOMA_TYPE, the MIDAMBLE_NOMA_MODE_PERIODICITY, the INTERLEAVER_PARAMETER, and the ESTIMATED_INTERFERENCE_LEVEL in Fig. 12.

Specifically describing each Parameter of the RXVECTOR, the PHY Layer notifies, in the received PPDU #1, of information (the FORMAT in Fig. 12) indicating whether or not the NOMA scheme is applied.

In a case of providing notification of information indicating that the NOMA scheme is applied in the received PPDU #1, the PHY Layer may provide the notification to the MAC Sublayer with notification including information indicating the NOMA scheme applied to the NOMA_TYPE in Fig. 12 in the NOMA_TYPE. Alternatively, in a case where notification of the information indicating that the NOMA scheme is applied is provided in the received PPDU #1, when there is an insertion location of the midamble, the PHY Layer may provide the MAC Sublayer with notification including information indicating the insertion location of the midamble in the MIDAMBLE_NOMA_MODE_PERIODICITY in Fig. 12.

In Fig. 12, the "BEHT_NOMA" is indicated as an example of information indicated by the FORMAT in a case where the NOMA scheme is applied.

Furthermore, in a case where the NOMA scheme applied to the received PPDU #1 is NOMA of the interleaved domain (interleaver domain multiple access (IDMA)), the PHY Layer may provide the MAC Layer with notification including information indicating the interleaving pattern indicated by the NOMA Parameter of the PPDU #1 included in the INTERLEAVER_PARAMETER in Fig. 12.

In Fig. 12, in a case where the applied NOMA scheme is of the interleaved domain, "1" is indicated as an example of the information indicated by the NOMA_TYPE.

Furthermore, in a case where the NOMA scheme applied to the received PPDU #1 is of NOMA of the power domain (power-domain NOMA), the PHY Layer may provide the MAC Layer with notification including information indicating estimated reception electric power of the PPDU #1 in the AP that is a desired destination terminal of the PPDU #1, in the ESTIMATED_INTERFERENCE_LEVEL in Fig. 12.

At this time, the information indicating the estimated reception electric power may be information indicated in the NOMA Parameter subfield in the received PPDU #1. In Fig. 12, in a case where the applied NOMA scheme is of the power domain, "0" is indicated as an example of the information indicated by the NOMA_TYPE.

<Generation of TXVECTOR>

The MAC sublayer notified of the RXVECTOR from the PHY layer calculates sending parameters such as MCS on the basis of the RXVECTOR, determines sending parameters, and notifies the PHY layer of the TXVECTOR. A decision criterion for notifying of the TXVECTOR may be a case where it is decided to perform sending with multiplexing in the PPDU #1 by applying the NOMA scheme, and the decision may be performed by any one of the control unit 32, the wireless control unit 51, and the data processing unit 52. As a specific example, the decision criterion maybe a case where the following is satisfied.
(1) The NOMA_TYPE is included in the RXVECTOR, and information indicating a NOMA scheme applicable by the STA #2 at the time of sending is included.
(2) The STA #2 holds data traffic requiring immediate sending.
(3) In a case where the NOMA_TYPE indicates a NOMA scheme of the power domain, an allowable interference level is greater than or equal to a certain threshold value.
(4) In a case where the NOMA_TYPE indicates a NOMA scheme of the interleaved domain, at least one of the interleaving patterns applicable to the STA #2 is not used.

<Notification of TXVECTOR>

After the RXVECTOR is notified of the MAC sublayer, the STA #2 that has decided to perform NOMA transmission with multiplexing in the PPDU #1 notifies the PHY Layer of the TXVECTOR from the MAC sublayer.
At this time, as described above, the TXVECTOR includes each Parameter of the FORMAT, the NOMA_TYPE, the MIDAMBLE_NOMA_MODE_PERIODICITY, and the INTERLEAVER_PARAMETER in Fig. 12.
The FORMAT includes information indicating that the PPDU to which the NOMA scheme is applied is generated and sent. In the case of Fig. 12, as a specific example indicating that the NOMA scheme is applied, the FORMAT represents the "BEHT_NOMA".
The NOMA_TYPE includes information indicating the NOMA scheme applied to the PPDU to be generated. In the case of Fig. 12, as a specific example, the NOMA_TYPE indicates "0" in a case where the applied NOMA scheme is of the interleaved domain, and the NOMA_TYPE indicates "1" in a case where the applied NOMA scheme is of the power domain.
The MIDAMBLE_NOMA_MODE_PERIODICITY includes information indicating a midamble portion to be inserted in the PPDU to be generated.
In a case where the NOMA scheme applied in the PPDU to be generated is of the interleaved domain, the INTERLEAVER_PARAMETER includes information indicating an interleaving sequence to be used.
Note that, in a case where the NOMA scheme applied in the PPDU #2 to be generated is of the power domain, notification including information indicating sending electric power in the TXVECTOR may be separately provided to the PHY Layer.
As described above, in the STA #2, the PPDU #1 sent by the STA #1 can be analyzed, the PPDU #2 can be generated and transmitted by using the NOMA scheme.

<3. Others>

<Effects of present technology>

As described above, in the present technology, a data unit is generated including, in a preamble, position information indicating a position of a midamble and parameter information of a non-orthogonal multiple access scheme that is used by the wireless communication terminal in a multi-domain of the non-orthogonal multiple access scheme to be applied to sending to the wireless communication device. Then, the generated data unit is sent to the wireless communication device.
Therefore, a degree of freedom of a sending time of the wireless communication terminal can be improved.
As a result, data traffic requiring immediate sending can be transmitted with low delay.

<Configuration Example of Computer>

The series of processes described above can be executed by hardware and also can be executed by software.

In a case where the series of the processing is executed by software, a program included in the software is installed from a program recording medium to, for example, a computer incorporated in dedicated hardware, or a general-purpose personal computer.

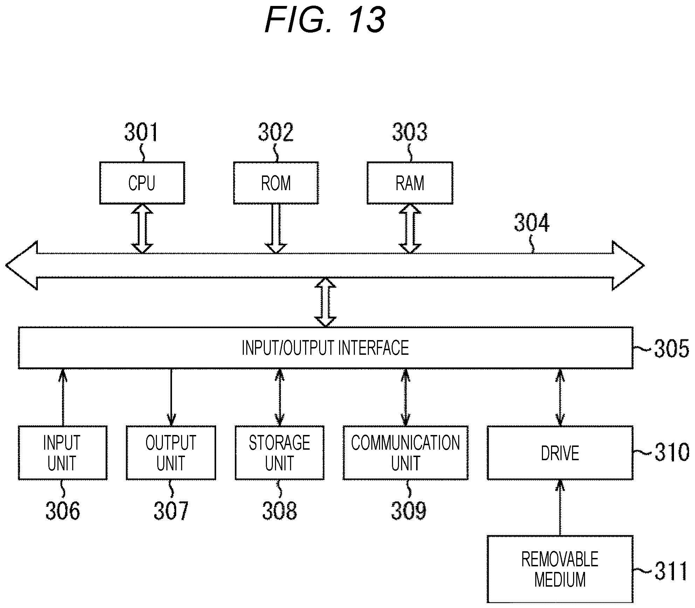

Fig. 13 is a block diagram illustrating a configuration example of hardware of a computer that executes the above-described series of processes by a program.

A central processing unit (CPU) 301, a read only memory (ROM) 302, and a random access memory (RAM) 303 are mutually connected by a bus 304.

Furthermore, an input/output interface 305 is connected to the bus 304. An input unit 306 including a keyboard, a mouse, and the like, and an output unit 307 including a display, a speaker, and the like are connected to the input/output interface 305. In addition, a storage unit 308 including a hard disk, a nonvolatile memory, or the like, a communication unit 309 including a network interface or the like, and a drive 310 that drives a removable medium 311 are connected to the input/output interface 305.

In the computer configured as described above, the series of processes described above is performed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting and is installed in the storage unit 308.

Note that the program executed by the computer may be a program that performs processing in a time-series manner in the order described in the present specification, or may be a program that performs processing in parallel or at necessary timing such as when a call is made.

Note that, in the present specification, a system means an assembly of a plurality of components (devices, modules (parts), and the like), and it does not matter whether or not all the components are located in the same housing. Therefore, a plurality of devices housed in separate housings and coupled via a network and one device in which a plurality of modules is housed in one housing are both systems.

In addition, the effects described in the present specification are merely examples and not restrictive, and there may also be other effects.

Embodiments of the present technology are not limited to the embodiments described above, and various modifications can be made without departing from the gist of the present technology.

For example, the present technology may be configured as cloud computing in which one function is shared by a plurality of devices via a network and processed in cooperation.

Furthermore, each step described in the flowchart described above can be executed by one device or executed by a plurality of devices in a shared manner.

Moreover, in a case where a plurality of processing is included in one step, the plurality of the processing included in the one step can be executed by one device or by a plurality of devices in a shared manner.

<Example of Configuration Combinations>

The present technology can also be configured as follows.

(1) A wireless communication terminal including:

a generation unit configured to generate a data unit including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device; and
a wireless control unit configured to cause sending of the data unit generated by the generation unit to the wireless communication device.

(2) The wireless communication terminal according to (1) above, further including:

a reception unit configured to receive a first data unit that is the data unit being sent from another wireless communication terminal, the first data unit also including type information indicating the non-orthogonal multiple access scheme in the preamble, in which
the wireless control unit determines whether or not to perform sending to which the non-orthogonal multiple access scheme is applied, on the basis of the preamble of the received first data unit, and
in a case where it is decided to perform sending to which the non-orthogonal multiple access scheme is applied, the generation unit generates a second data unit, and

the wireless control unit causes sending of the generated second data unit to the wireless communication device.

(3) The wireless communication terminal according to (2) above, in which

in a case where it is decided to perform sending to which the non-orthogonal multiple access scheme is applied, the generation unit determines parameter information to be used by the wireless communication terminal on the basis of the preamble of the first data unit, and generates the second data unit including, in the preamble, the determined parameter information to be used by the wireless communication terminal.

(4) The wireless communication terminal according to (2) or (3) above, in which

in a case where it is decided to perform sending to which the non-orthogonal multiple access scheme is applied, the wireless control unit causes sending to the wireless communication device such that the midamble of the first data unit and the preamble of the second data unit are received by the wireless communication device at a same time, on the basis of the preamble of the first data unit.

(5) The wireless communication terminal according to any one of (2) to (4) above, in which

in a case where it is decided to perform sending to which the non-orthogonal multiple access scheme is applied, the generation unit generates the second data unit in which the preamble of the second data unit is disposed to have a position and a length matching a position and a length of the midamble of the first data unit such that the midamble of the first data unit and the preamble of the second data unit are received at a same time in the wireless communication device, on the basis of the preamble of the first data unit.

(6) The wireless communication terminal according to any one of (2) to (5) above, in which

the reception unit receives information regarding the non-orthogonal multiple access scheme and being sent from the wireless communication device, and
the wireless control unit decides whether or not to perform sending to which the non-orthogonal multiple access scheme is applied, on the basis of the received information regarding the non-orthogonal multiple access scheme.

(7) The wireless communication terminal according to (6) above, in which
the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs the sending to which the non-orthogonal multiple access scheme is applied.
(8) The wireless communication terminal according to (1) above, in which
the generation unit generates the data unit in which type information indicating the non-orthogonal multiple access scheme is also included in the preamble.
(9) The wireless communication terminal according to (8) above, further including:

a reception unit configured to receive information regarding the non-orthogonal multiple access scheme and being sent from the wireless communication device, in which
the generation unit generates the data unit on the basis of the information regarding the non-orthogonal multiple access scheme.

(10) The wireless communication terminal according to (9) above, in which
the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs the sending to which the non-orthogonal multiple access scheme is applied.
(11) The wireless communication terminal according to (9) above, in which

the wireless control unit and the wireless communication device mutually provide notification of information indicating capability regarding the non-orthogonal multiple access scheme, and

the generation unit generates the data unit on the basis of the information indicating capability regarding the non-orthogonal multiple access scheme.

(12) A wireless communication method including,
by a wireless communication terminal:

generating a data unit including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device, and

causing sending of the generated data unit to the wireless communication device.

(13) A wireless communication device including:

a wireless control unit configured to cause sending of information regarding a non-orthogonal multiple access scheme to a wireless communication terminal; and

a reception unit configured to receive a data unit being sent by the wireless communication terminal with the non-orthogonal multiple access scheme applied, on the basis of the information regarding the non-orthogonal multiple access scheme.

(14) The wireless communication device according to (13) above, in which

the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs sending to which the non-orthogonal multiple access scheme is applied.

(15) The wireless communication device according to (14) above, in which

the wireless control unit and the wireless communication terminal mutually provide notification of information indicating capability regarding the non-orthogonal multiple access scheme, and

the wireless control unit causes sending of the information regarding the non-orthogonal multiple access scheme to the wireless communication terminal on the basis of the information whose notification is provided, the information indicating capability regarding the non-orthogonal multiple access scheme.

(16) A wireless communication method including,
by a wireless communication device:

causing sending of information regarding a non-orthogonal multiple access scheme to a wireless communication terminal; and

receiving a data unit being sent by the wireless communication terminal with the non-orthogonal multiple access scheme applied, on the basis of the information regarding the non-orthogonal multiple access scheme.

REFERENCE SIGNS LIST

| | |
|---|---|
| 11 | Wireless communication device |
| 31 | Communication unit |
| 32 | Control unit |
| 41 | Antenna |
| 51 | Wireless control unit |
| 52 | Data processing unit |
| 53 | Modulation-demodulation unit |
| 54 | Signal processing unit |
| 55 | Channel estimation unit |

56, 56-1 to 56-n      Wireless interface unit
57, 57-1 to 57-n      Amplifier unit

**Claims**

1. A wireless communication terminal comprising:

   a generation unit configured to generate a data unit including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device; and
   a wireless control unit configured to cause sending of the data unit generated by the generation unit to the wireless communication device.

2. The wireless communication terminal according to claim 1, further comprising:

   a reception unit configured to receive a first data unit that is the data unit being sent from another wireless communication terminal, the first data unit also including type information indicating the non-orthogonal multiple access scheme in the preamble, wherein
   the wireless control unit determines whether or not to perform sending to which the non-orthogonal multiple access scheme is applied, on a basis of the preamble of the received first data unit, and
   in a case where it is decided to perform sending to which the non-orthogonal multiple access scheme is applied, the generation unit generates a second data unit, and
   the wireless control unit causes sending of the generated second data unit to the wireless communication device.

3. The wireless communication terminal according to claim 2, wherein

   in a case where it is decided to perform sending to which the non-orthogonal multiple access scheme is applied, the generation unit determines parameter information to be used by the wireless communication terminal on a basis of the preamble of the first data unit, and generates the second data unit including, in the preamble, the determined parameter information to be used by the wireless communication terminal.

4. The wireless communication terminal according to claim 2, wherein

   in a case where it is decided to perform sending to which the non-orthogonal multiple access scheme is applied, the wireless control unit causes sending to the wireless communication device such that the midamble of the first data unit and the preamble of the second data unit are received by the wireless communication device at a same time, on a basis of the preamble of the first data unit.

5. The wireless communication terminal according to claim 2, wherein

   in a case where it is decided to perform sending to which the non-orthogonal multiple access scheme is applied, the generation unit generates the second data unit in which the preamble of the second data unit is disposed to have a position and a length matching a position and a length of the midamble of the first data unit such that the midamble of the first data unit and the preamble of the second data unit are received at a same time in the wireless communication device, on a basis of the preamble of the first data unit.

6. The wireless communication terminal according to claim 2, wherein

   the reception unit receives information regarding the non-orthogonal multiple access scheme and being sent from the wireless communication device, and
   the wireless control unit decides whether or not to perform sending to which the non-orthogonal multiple access scheme is applied, on a basis of the received information regarding the non-orthogonal multiple access scheme.

7. The wireless communication terminal according to claim 6, wherein
   the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs the sending to which the non-orthogonal multiple access scheme is applied.

8. The wireless communication terminal according to claim 1, wherein
the generation unit generates the data unit in which type information indicating the non-orthogonal multiple access scheme is also included in the preamble.

9. The wireless communication terminal according to claim 8, further comprising:

   a reception unit configured to receive information regarding the non-orthogonal multiple access scheme and being sent from the wireless communication device, wherein
   the generation unit generates the data unit on a basis of the information regarding the non-orthogonal multiple access scheme.

10. The wireless communication terminal according to claim 9, wherein
the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs the sending to which the non-orthogonal multiple access scheme is applied.

11. The wireless communication terminal according to claim 9, wherein

   the wireless control unit and the wireless communication device mutually provide notification of information indicating capability regarding the non-orthogonal multiple access scheme, and
   the generation unit generates the data unit on a basis of the information indicating capability regarding the non-orthogonal multiple access scheme.

12. A wireless communication method comprising,
by a wireless communication terminal:

   generating a data unit including, in a preamble, position information indicating a position of a midamble and parameter information of a non-orthogonal multiple access scheme that is used by the wireless communication terminal in a multi-domain of the non-orthogonal multiple access scheme to be applied to sending to a wireless communication device, and
   causing sending of the generated data unit to the wireless communication device.

13. A wireless communication device comprising:

   a wireless control unit configured to cause sending of information regarding a non-orthogonal multiple access scheme to a wireless communication terminal; and
   a reception unit configured to receive a data unit being sent by the wireless communication terminal with the non-orthogonal multiple access scheme applied, on a basis of the information regarding the non-orthogonal multiple access scheme.

14. The wireless communication device according to claim 13, wherein
the information regarding the non-orthogonal multiple access scheme includes at least one of: information indicating the non-orthogonal multiple access scheme that is recommended; information indicating a wireless communication terminal that can implement the non-orthogonal multiple access scheme; or information indicating a maximum number of streams that can be used in a case where the wireless communication terminal that can implement the non-orthogonal multiple access scheme performs sending to which the non-orthogonal multiple access scheme is applied.

15. The wireless communication device according to claim 14, wherein

the wireless control unit and the wireless communication terminal mutually provide notification of information indicating capability regarding the non-orthogonal multiple access scheme, and

the wireless control unit causes sending of the information regarding the non-orthogonal multiple access scheme to the wireless communication terminal on a basis of the information whose notification is provided, the information indicating capability regarding the non-orthogonal multiple access scheme.

16. A wireless communication method comprising,

by a wireless communication device;

causing sending of information regarding a non-orthogonal multiple access scheme to a wireless communication terminal; and

receiving a data unit being sent by the wireless communication terminal with the non-orthogonal multiple access scheme applied, on a basis of the information regarding the non-orthogonal multiple access scheme.

# FIG. 1

# FIG. 2

## FIG. 3

EP 4 380 080 A1

*FIG. 4*

WIRELESS COMMUNICATION DEVICE — 11

COMMUNICATION UNIT — 31

CONTROL UNIT — 32

POWER SUPPLY UNIT — 33

DATA PROCESSING UNIT — 52

WIRELESS CONTROL UNIT — 51

MODULATION-DEMODULATION UNIT — 53

SIGNAL PROCESSING UNIT — 54

CHANNEL ESTIMATION UNIT — 55

WIRELESS INTERFACE UNIT — 56-1

WIRELESS INTERFACE UNIT — 56-n

AMPLIFIER UNIT — 57-1

AMPLIFIER UNIT — 57-n

41-1

41-n

. . .

EP 4 380 080 A1

# FIG. 5

|     | AP | STA#1 | STA#2 |
|-----|----|-------|-------|

S11 — PROVIDE NOTIFICATION OF CAPABILITY INFORMATION

S12 — PROVIDE NOTIFICATION OF SCHEDULING INFORMATION (e.g. TIME AND FREQUENCY)

S13 — NOMA Transmission

S14 — MAKE NOMA IMPLEMENTATION DECISION

S15 — NOMA Transmission

S16 — Ack

## FIG. 6

| Frame Control | | RA | TA | | UL NOMA element | |
|---|---|---|---|---|---|---|

| Element ID | Length | Tx/Rx | NOMA Types | Parameter Set | |
|---|---|---|---|---|---|

# FIG. 7

| | Frame<br>Control | ... | RA | SA | ... | FE Schedule element | ... |
|---|---|---|---|---|---|---|---|

| Element<br>ID | Length | ... | Number of<br>Allocation | Channel<br>Allocation#1 | ... | Channel<br>Allocation#N |
|---|---|---|---|---|---|---|

| BW | Allocation<br>Start | Allocation<br>End | Recommended<br>NOMA Type | Target<br>RSSI | STA Num | Granted<br>STA<br>#1 | SS Num<br>Max#1 | ... | Granted<br>STA<br>#M | SS Num<br>Max#M | |
|---|---|---|---|---|---|---|---|---|---|---|---|

EP 4 380 080 A1

FIG. 8

EP 4 380 080 A1

# FIG. 9

| | Preamble | | | | | Midamble | | | | |
|---|---|---|---|---|---|---|---|---|---|---|
| LEGACY | BEHT-SIG-A | BEHT-STF #1 | BEHT-LTF #1 | | (PSDU) | LEGACY | BEHT-SIG-A | BEHT-STF #2 | BEHT-LTF #2 | (PSDU) | ⋯ |

| | NOMA Type | (N_SS) | NOMA Parameter#1 | ⋯ | NOMA Parameter#K | MCS #1 | ⋯ | MCS #K | Midamble Info | |

## FIG. 10

| LEGACY | BEHT-SIG-A | BEHT-STF #1 | BEHT-LTF #1 | | (PSDU#1) | | ... |
|---|---|---|---|---|---|---|---|

Preamble

| | | (N_SS) | NOMA Parameter#1 | ... | NOMA Parameter#K | MCS #1 | ... | MCS #K | Midamble Info | |
|---|---|---|---|---|---|---|---|---|---|---|

EP 4 380 080 A1

# FIG. 11

EP 4 380 080 A1

MAC Sublayer

SENDING PARAMETER
IS CALCULATED
(SUCH AS MCS)

A1 ↑      A2

PHY Layer

| Preamble | PSDU#1 (RECEIVED SIGNAL) | (Padding) |

| Preamble | PSDU#2-1 (SENT SIGNAL) | (Padding) |

# FIG. 12

| Parameter | Condition | Value | TXVECTOR | RXVECTOR |
|---|---|---|---|---|
| FORMAT | — | "BEHT_NOMA" indicates BEHT NOMA PPDU format | Y | Y |
| NOMA_TYPE | FORMAT is BEHT_NOMA | "0" indicates power-domain NOMA <br> "1" indicates IDMA | Y | Y |
| MIDAMBLE_ NOMA_MODE_ PERIODICITY | FORMAT is BEHT_NOMA | Indicates where midambles are in the PPDU <br><br> WHICH MAY BE SIMILAR TO "MIDAMBLE_PERIODICITY" | Y | Y |
| INTERLEAVER_ PARAMETER | NOMA_TYPE is "1" | TXVECTOR: <br> indicates interleaving patterns to be used <br><br> RXVECTOR: <br> indicates all interleaving patterns used in the received PPDU | Y | Y |
| ESTIMATED_ INTERFERENCE_ LEVEL | NOMA_TYPE is "0" | Indicates estimated RSSI at intended receiver of the received PPDU | N | Y |
|  |  |  |  |  |

EP 4 380 080 A1

## FIG. 13

## INTERNATIONAL SEARCH REPORT

| International application No. |
|---|
| **PCT/JP2022/008258** |

**A. CLASSIFICATION OF SUBJECT MATTER**

*H04J 99/00*(2009.01)i; *H04L 27/26*(2006.01)i
FI: H04J99/00 100; H04L27/26 110

According to International Patent Classification (IPC) or to both national classification and IPC

**B. FIELDS SEARCHED**

Minimum documentation searched (classification system followed by classification symbols)

H04J99/00; H04L27/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/084460 A1 (SONY CORP) 02 June 2016 (2016-06-02) paragraphs [0100]-[0107], [0125]-[0136] | 13-16 |
| A | | 1-12 |
| A | JP 2018-191104 A (SONY CORP) 29 November 2018 (2018-11-29) paragraphs [0038]-[0039] | 1-16 |
| A | JP 2013-544463 A (SCA IPLA HOLDINGS INC) 12 December 2013 (2013-12-12) paragraph [0056] | 1-16 |
| A | CHEN, Xiaogang et al. EHT TF Clarifications. IEEE 802.11-21/0485r3. 17 March 2021, slides 1-12 entire text, all drawings | 1-16 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2022** | **17 May 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

<table>
<tr><td colspan="2"><strong>INTERNATIONAL SEARCH REPORT</strong><br>Information on patent family members</td><td>International application No.<br><br><strong>PCT/JP2022/008258</strong></td></tr>
</table>

| Patent document cited in search report | Publication date (day/month/year) | Patent family member(s) | Publication date (day/month/year) |
|---|---|---|---|
| WO 2016/084460 A1 | 02 June 2016 | US 2018/0227903 A1 paragraphs [0139]-[0146], [0164]-[0181]<br>EP 3226451 A1<br>CN 107078834 A | |
| JP 2018-191104 A | 29 November 2018 | US 2020/0059960 A1 paragraphs [0075]-[0076]<br>EP 3621401 A1<br>CN 110547031 A | |
| JP 2013-544463 A | 12 December 2013 | US 2013/0329654 A1 paragraph [0074]<br>CN 103210670 A<br>KR 10-2014-0023873 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019520728 A